# FASCICULE DE BREVET EUROPEEN

(11) **EP 0 443 948 B1**
(45) Date de publication et mention de la délivrance du brevet: **21.09.1994**
(21) Numéro de dépôt: 91400451.0
(22) Date de dépôt: 20.02.1991
(51) Int. Cl.: C03B 23/025, C03B 23/027, C03B 29/04

(54) **Bombage de feuilles de verre par effondrement sur un cadre de bombage**
Biegen von Glasscheiben durch Schwerkraft auf einer Biegeform
Bending of glass-sheets by gravity on a bending mould

(30) Priorité: 21.02.1990 FR 9002090
(43) Date de publication de la demande: 28.08.1991
(73) Titulaire: SAINT-GOBAIN VITRAGE INTERNATIONAL, 92400 Courbevoie (FR)
(72) Inventeur: Weber, Frédéric, F-60200 Compiègne (FR); Didelot, Claude, F-60150 Thourotte (FR)
(74) Mandataire: Menes, Catherine

(56) Documents cités:
- EP-A- 0 186 841
- EP-A- 0 376 509
- WO-A-90/03335
- CH-A- 340 962
- US-A- 3 744 985
- US-A- 4 726 832

## Description

L'invention a trait aux techniques de bombage de feuilles de verre par effondrement sur un cadre de bombage. Elle concerne plus précisément une installation permettant un contrôle très précis des conditions de chauffage de feuilles de verre en vue d'une maîtrise totale des courbures principales et secondaires que l'on souhaite conférer à la feuille de verre. L'invention s'applique notamment à la réalisation de vitrages feuilletés destinés aux véhicules automobiles.

Pour bomber des paires de feuilles de verre en vue de la réalisation de vitrages feuilletés, il est usuel de déposer les deux feuilles de verre sur un cadre de bombage encore appelé squelette et de faire avancer ce cadre de manière continue ou pas à pas, au travers d'une série de stations de chauffage dans lesquelles le cadre séjourne plus ou moins longtemps. Dans les fours électriques, chacune de ces stations de chauffage est tapissée de résistances constituées par exemple par des tubes en céramique réfractaire autour desquels sont boudinés des fils électriques. Les tubes garnissant la sole et la voûte du four sont montés parallèlement à l'axe du four, alors que les vitrages sont introduits perpendiculairement à cet axe; de cette façon, il est très aisé de surchauffer les bords latéraux du vitrage auquel on désire généralement conférer une courbure un peu plus prononcée que celle conférée à la partie centrale du vitrage. De plus, une telle orientation privilégie la qualité optique dans ce sens que les éventuels défauts optiques générés par un chauffage, non rigoureusement uniforme, mais selon une série de bandes correspondant aux tubes-résistances se trouvent placés sensiblement verticalement après la pose du vitrage dans le véhicule et ne gênent absolument pas la visibilité du conducteur. Ce type de four est par exemple connu du brevet CH-A-340 962 qui décrit une structure de four comprenant successivement des sections de pré-chauffage, de cintrage puis de "neutralisation". Notamment dans la zone de cintrage, sont en effet prévues, du côté de la voûte,des résistances disposées parallèlement à l'axe du four, et du côté de la sole des résistances disposées transversalement à cet axe.

De tels procédés conviennent bien à l'obtention de vitrages dits cylindriques, ne comportant donc qu'un seul rayon de courbure dans le plan horizontal. Toutefois, l'évolution des formes des véhicules automobiles conduit à une demande de vitrages présentant un double bombage, c'est-à-dire ayant une courbure secondaire dans une direction essentiellement perpendiculaire à la direction de la courbure principale, ce qui permet par exemple d'assurer une continuité entre la toiture du véhicule et son pare-brise. Cette courbure secondaire est d'autant plus difficile à obtenir que la pliure est marquée - et donc que le rayon de courbure est petit - et/ou qu'elle se situe près d'un bord du vitrage. Dans ces cas, il est nécessaire de surchauffer le vitrage dans ces zones de forte courbure au risque d' accentuer le bombage de la partie centrale du vitrage qui prend une déformation sphérique. Si de tels vitrages peuvent à la rigueur être obtenus avec ces procédés selon l'art, notamment par une subdivision des résistances électriques des zones terminales de l'installation, il est pratiquement exclu d'obtenir des vitrages dits en "S", c'est-à-dire présentant en dehors de leur courbure principale deux rayons de courbure secondaire dans des directions inverses. De tels vitrages en "S" conviennent à la réalisation d'un véhicule dont le pare-brise tangeante le capot et le toit.

Il est cependant connu de la demande de brevet EP-A-0 376 509 un type de four qui peut permettre d'obtenir des profils de bombage complexe, mais dont le principe de fonctionnement impose aux feuilles de verre un défilement pas-à-pas au travers du four : les feuilles doivent en effet s' immobiliser sous au moins un élément chauffant qualifié de modulaire, dont la surface de chauffage radiante, non plane, rappelle de manière plus ou moins prononcée le bombage que l'on veut conférer aux feuilles de verre. Cet élément est composé d'une pluralité d'éléments chauffants unitaires dont la puissance de chauffe peut être régulée de manière autonome. A chaque taille de feuille de verre et chaque courbure spécifique à conférer à celle-ci devra correspondre un élément chauffant modulaire conçu en conséquence.

La présente invention a pour but de remédier aux inconvénients cités par la fourniture d'une installation permettant de mieux maîtriser le double-bombage, y compris lorsque le rayon de courbure n'est pas constant sur toute la longueur ou la largeur du vitrage, ou même s'inverse.

Ce but est atteint selon l'invention par un four pour le bombage de feuilles de verre par effondrement sur un cadre de bombage, comportant au moins une station de, chauffage dont les parois sont garnies de résistances caractérisé en ce que la série de résistances associée à la voûte de la station de chauffage est répartie entre une ou plusieurs zones axiales dans lesquelles les résistances sont orientées parallèlement à l'axe du four et une ou plusieurs zones transversales dans lesquelles les résistances sont orientées perpendiculairement à l'axe du four, la puissance de chauffe attribuée à une zone axiale ou transversale donnée étant régulée indépendamment des puissances de chauffe attribuées aux autres zones axiales et transversales.

Par résistance électrique on entend au sens de l'invention notamment des tubes-résistances en céramique réfractaire autour desquels sont boudinés des fils électroconducteurs, des tubes creux en quartz enfermant des filaments chauffants, des petits éléments chauffants,de préférence carrés, susceptibles d'être assemblés en damiers ou tout autre moyen équivalent connu de l'homme de l'art, le seul point critique étant que ces moyens doivent avoir une orientation longitudinale privilégiée, de sorte que ces moyens ou groupes de moyens sont analogues à un tube-résistance du point de vue des surfaces chauffées.

Avec une telle disposition des tubes-résistances, on peut obtenir différentes configurations de chauffe particulièrement bien adaptées au profil de température que l'on souhaite conférer à la feuille de verre, et ceci avec une très grande précision de localisation. Dans une forme de réalisation préférée de l'invention, les zones transversales sont centrées sur l'axe du four afin d'être en regard de la partie centrale des feuilles de verre, les feuilles de verre étant déplacées au travers des différentes stations de chauffage selon cet axe parallèl à leur hauteur. Ainsi la surface supérieure des feuilles de verre se trouve exposée à des éléments chauffants essentiellement parallèles à ses bords.

La précision du profil de chauffe est d'autant plus simple à maîtriser que le nombre d'éléments chauffants est grand. Il est par exemple tout particulièrement intéressant de disposer d'une nouvelle zone transversale selon un pas inférieur à 150 mm ou mieux à 100 mm, et de couvrir la longueur de la partie centrale du vitrage non avec un seul tube-résistance, mais deux ou trois tubes-résistances mis bout à bout et alimentés en puissance électrique de manière indépendante.

Ce qui est vrai pour la partie centrale du vitrage - où on cherche à obtenir une courbure très prononcée par exemple le long du bord supérieur tangeantant le toit du véhicule automobile - est aussi vrai pour les parties latérales du vitrage plus particulièrement chauffées par les zones axiales. Aussi est-il avantageux de travailler avec quatre ou six zones axiales disposées latéralement par rapport à l'axe du four, afin d'être en regard de chacune des deux parties latérales du vitrage.

De façon préférée chaque zone de chauffe, axiale ou transversale, est constituée par un ensemble de par exemple deux tubes-résistances supportés par des berceaux communs. La position de chaque berceau peut être réglée en hauteur de manière à modifier la distance entre la feuille de verre et les résistances.

Avantageusement, la course verticale des berceaux peut être réglée de façon à faire varier à volonté la distance entre l'axe d'un tube-résistance et la feuille de verre entre 100 et 300 mm et de préférence entre 100 et 250 mm, le réglage s'effectuant de l'extérieur du four par des commandes manuelles ou automatiques. Des commandes rapides permettent la descente des berceaux en cours même de procédé, ce qui permet éventuellement de maintenir constante la distance entre la feuille de verre et une résistance donnée alors même que la feuille de verre s'effondre sur son squelette de bombage.

Un four selon l'invention peut comporter une ou plusieurs sections de chauffe dont la paroi supérieure est garnie de zones de chauffe axiales et transversales. Toutefois, il n'est pas nécessaire que toutes les sections de chauffe soient du même modèle et dans les installations de grande capacité, on pourra associer aux sections de chauffe selon l'invention des sections de chauffe auxiliaires dont tous les tubes-résistances de la partie supérieure sont orientés parallèlement à la hauteur des feuilles de verre. Ces sections de chauffe auxiliaires sont de préférence dans la première partie du four, c'est-à-dire dans la partie du four plus particulièrement destinée au préchauffage de la feuille de verre et dans laquelle la température du verre est relativement plus faible. Même en faisant abstraction de l'aspect strictement financier (l'investissement lié à une section de chauffe dépend à l'évidence du nombre de zones de chauffe alimentées indépendamment), cette forme de réalisation est tout particulièrement avantageuse car elle correspond à la qualité optique maximale dans la mesure où elle minimise les risques de générer des bandes parallèles correspondant en quelque sorte à l'empreinte des tubes-résistances et qui pourraient gêner le conducteur du véhicule.

Le four selon l'invention se prête tout particulièrement à la réalisation de vitrages comportant un double bombage, c'est-à-dire comportant une courbure secondaire dans un plan perpendiculaire au plan de la courbure principale. En lui associant éventuellement un squelette de bombage constitué par un cadre ouvert en son centre, mais comportant une partie pleine convexe, le four selon l'invention permet également la réalisation dans des conditions industrielles de vitrages présentant une courbure secondaire en "S" et avec des points d'inflexion non centrés.

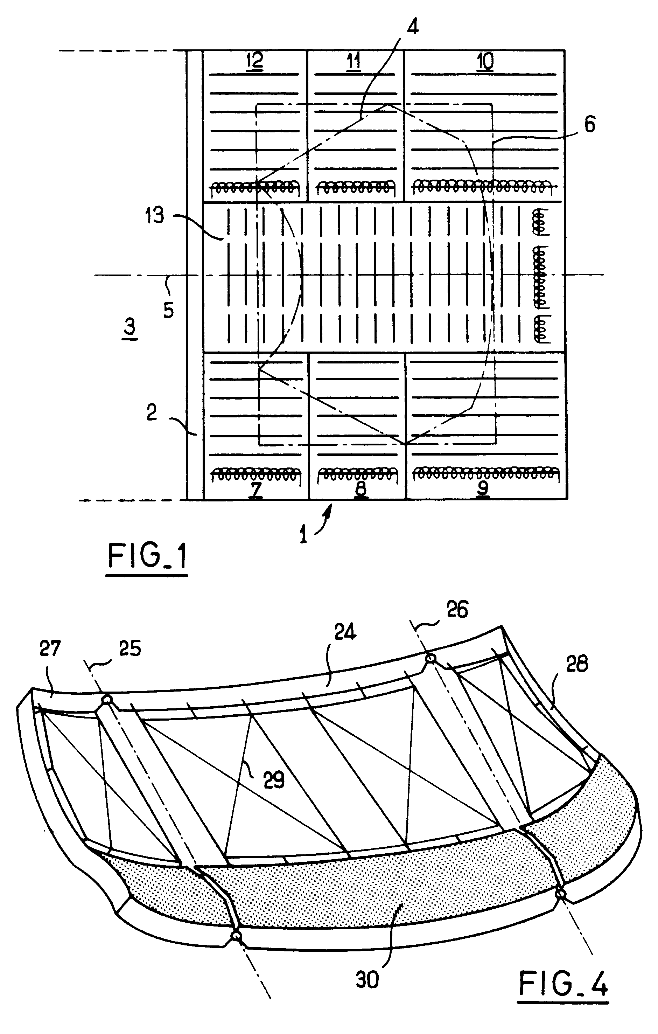

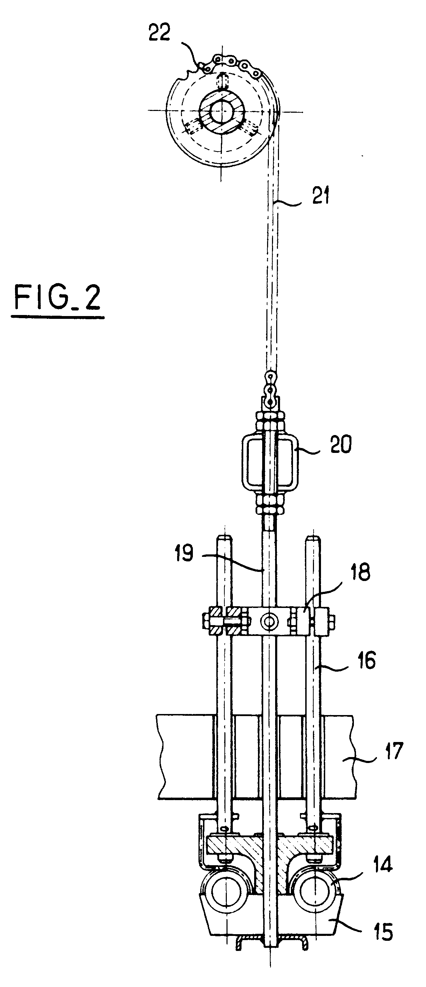

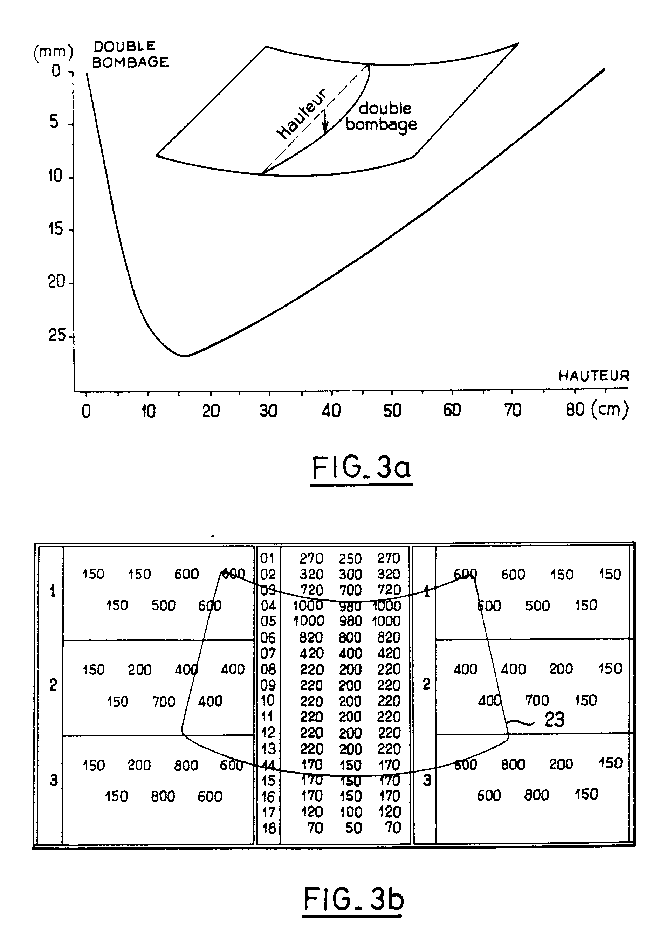

D'autres détails et caractéristiques avantageuses de l'invention ressortent de la description d'un four multicellulaire faite en référence aux dessins annexés qui représentent:
. **figure** 1 : un schéma en vue de dessus d'une section de four selon l'invention
. **figure 2** : une vue détaillée d'un berceau support de tubes-résistances et de son dispositif de réglage en hauteur,
. **figure** 3 : un exemple de tableau de chauffe (figure 3-b)) conduisant à un vitrage présentant une courbure secondaire décentrée (3-a),
. **figure 4** : une vue schématique en perspective d'un squelette de bombage avec une partie pleine plus particulièrement adapté à l'obtention de formes en "S".

La figure 1 est une vue schématique de dessus d'un four plus spécialement adapté à l'obtention de feuilles de verre bombées par paires en vue de leur assemblage par une feuille de matière plastique, pour la production par exemple de pare-brise automobile.

Le four ici schématisé ne comporte qu'une seule section de chauffe (four monocellulaire) mais il va de soi que des sections identiques ou du type section de chauffe auxiliaires peuvent être associées pour augmenter la capacité de l'installation.

Le four est constitué par une cellule 1 munie d'une porte d'ouverture 2 qui communique avec un sas de refroidissement 3. Dans cette cellule 1, les feuilles de verre 4 figurées par des traits discontinus et préalablement découpées et façonnées sont posées sur une forme de bombage 6 par exemple constituée par un cadre ouvert en son centre dont le profil correspond au profil que l'on souhaite conférer aux feuilles de verre. Cette forme de bombage 6 est portée par un chariot déplacé sur des rails parallèles à l'axe 5 et ici non représentés. Lorsque les feuilles de verre sont suffisamment chaudes, elles se déforment sous l'effet de leur poids et progressivement viennent à épouser le profil de la forme de bombage.

Les éléments de chauffage de la cellule sont constitués par des tubes en céramique réfractaire, par exemple des tubes en silice ou en alumino-silicates, autour desquels sont boudinés des fils métalliques. Ces résistances garnissent la sole du four où elles sont montées parallèles à l'axe 5 du four. Pour la sole on peut utiliser par exemple des tubes d'environ 1 mètre de long et montés fixes et dont les extrémités ne débordent pas à l'extérieur du four. De préférence, les résistances de la sole sont réparties par zone, par exemple au nombre de 6, chaque zone étant alimentée en puissance électrique de manière indépendante des autres zones. Les parois du four parallèles à l'axe 5 sont de préférence également munies de tubes-résistances montés fixes. Toutes ces dispositions sont bien connus de l'art et n'appellent pas de commentaires particuliers.

Par contre, l'invention propose une nouvelle disposition des tubes-résistances qui garnissent la voûte - et par lesquelles sont dissipés environ 75 % de la puissance totale de chauffe de la cellule. La cellule ici schématisée comporte en effet 6 zones latérales de chauffe, numérotées de 7 à 12, formées de résistances montées sur des berceaux suspendus à la voûte, disposées parallèlement à l'axe 5 du four, et de ce fait qualifiées de zones de chauffe axiales. Deux zones symétriques par rapport à l'axe du four (zones 7 et 12 par exemple) dissipent généralement des puissances électriques identiques, mais toutefois sont munies de moyens d'alimentation électrique autonomes. Il en est de même pour des zones de chauffe d'un même côté de l'axe, chacune des 6 zones pouvant être régulée en puissance de 0 à 100 %.

La cellule possède également une zone centrale 13 qui est au sens de l'invention une zone transversale faisant face à la partie centrale des feuilles de verre. Cette zone transversale comporte dans le cas ici représenté 3 fois 18 tubes-résistances montés transversalement et définissant ensemble 3 sous-zones longitudinales également alimentées indépendamment.

Tous les tubes-résistances associés à la voûte sont posés sur des berceaux suspendus à la voûte de manière réglable de sorte qu'il est possible de faire varier à volonté le profil géométrique de chauffe et de l'adapter au mieux aux dimensions des feuilles de verre traitées et au type de galbe que l'on souhaite leur conférer. Dans le cas ici schématisé, on obtient par exemple un chauffage différencié des parties latérales des feuilles de verre qui permet de les bomber selon un rayon de courbure différent de celui des autres parties - et ceci sans entraîner un défaut de bombage dans ces autres parties dû à une augmentation du temps de séjour dans la cellule de bombage

Un dispositif de réglage en hauteur de la position des tubes-résistances est schématisé figure 2 où on remarque que les tubes-résistances 14, de préférence des tubes creux en alumino-silicate, sont posés deux par deux à leur extrémité sur des berceaux 15. Les fils électriques boudinés autour des tubes 14 sont connectés à une alimentation électrique via des tubulures isolées 16 passant au travers de la voûte 17, fixées par des attaches 18 à une potence 19 supportant également les berceaux 15. A l'extrémité supérieure de la potence 19 est vissée une attache 20 sur laquelle se raccorde une chaîne 21 engrenant sur une roue dentée 22. Pour abaisser le berceau, il suffit donc de faire tourner la roue 22, par exemple d'un tiers de tour et de la bloquer une fois les résistances 14 mises en place. La rotation des roues 22 peut être commandée manuellement ou de préférence par un dispositif automatique piloté depuis le tableau de contrôle du four. De cette façon, on peut aisément faire varier la distance entre la feuille de verre et les tubes-résistances, la chaîne étant prévue pour un battement de par exemple 200 ou 250 mm. Dans le cas de très fortes courbures, on peut également commander la descente des tubes-résistances en cours de processus de bombage.

L'intérêt du four selon l'invention ressort par exemple de l'examen des résultats de la figure 3. Le problème ici posé était celui de la réalisation d'un volume présentant une courbure décentrée par rapport à la hauteur du pare-brise, en conformité avec la courbe de la figure 3-a où sont indiquées les valeurs du double-bombage en millimètres par rapport à la cote dans la hauteur du pare-brise (en centimètre), ou autrement dit la valeur de la flèche dans la direction secondaire de bombage comme l'illustre le croquis de vitrage figurant également sur cette figure 3-a. Ce vitrage a été obtenu dans un four selon l'invention comportant une station de bombage avec 3 x 18 zones de résistances transversales, en regard de la partie centrale du vitrage 23 dont on a représenté la position dans le four, et avec 6 x 7 zones de résistances axiales en regard des parties latérales. Tous les apports thermiques proviennent des résistances de la partie supérieure. Dans un premier temps, (480 secondes), on préchauffe le vitrage jusqu'à une température voisine de la température de déformation du verre, en réglant toutes les zones de manière identique (température de consigne 400°C). Dans un second temps, (360 secondes), on modifie totalement les valeurs des températures de consigne en suivant le tableau de chauffe représenté figure 3-b. Le très grand nombre de résistances disponibles, et leur disposition essentiellement parallèlement aux zones de plus forte courbure permet un réglage très fin du profil de température des feuilles de verre qui conduit avec une grande exactitude à l'obtention de la courbure souhaitée.

Il est également possible d'obtenir des courbures en "S", c'est-à-dire des vitrages présentant au moins un point d'inflexion selon leur hauteur. Dans ce cas, il est nécessaire de créer une différence de température très marquée entre des points de la surface des feuilles de verre pourtant très proches (la "bosse" doit en effet être surchauffée sans que le soit pour autant la partie du vitrage immédiatement adjacente qui doit par exemple être relativement droite et non très creusée). Ce creusement est évité si on utilise un squelette de bombage tel que celui schématisé à la figure 4. Ce squelette est constitué par un cadre métallique 24 articulé autour de deux axes 25 et 26, de manière à faire reposer la feuille de verre sur un squelette continu dès le début du formage, les parties latérales 27 et 28 du cadre étant relevées au cours du processus. Le cadre 24 est renforcé par des éléments raidisseurs 29 qui n'entrent jamais en contact avec la feuille de verre. Selon l'invention, il comporte également une partie pleine 30 qui permet l'obtention de la courbure convexe souhaitée. Avantageusement la partie de la feuille de verre en appui sur cette partie pleine 30 du cadre 24 est essentiellement chauffée par les zones de résistances sises de côté et non en regard de la feuille de verre, de sorte que la partie centrale de celle-ci n'est pas surchauffée par rayonnement.

## Revendications

1. Four (1, 2, 3) pour le bombage de feuilles de verre notamment par effondrement sur un cadre de bombage (6, 24), comportant au moins une station de chauffage dont les parois sont garnies de résistances, **caractérisé on ce que** la série de tubes-résistances (14) associée à la voûte de la station de chauffage est répartie entre une ou plusieurs zones axiales (7, 8, 9, 10, 11, 12) dans lesquelles les résistances (14) sont orientées parallèlement à l'axe (5) du four (1)et une ou plusieurs zones transversales (13) dans lesquelles les résistances (14) sont orientées perpendiculairement à l'axe (5) du four (1), la puissance de chauffe attribuée à une zone axiale (7, 8, 9, 10, 11, 12) ou transversale (13) donnée étant régulée indépendamment des puissances de chauffe attribuées aux autres zones axiales et transversales.

2. Four selon la revendication 1, **caractérisé en ce que** lesdites zones transversales (13) sont centrées sur l'axe (5) du four (1), afin d'être en regard de la partie centrale des feuilles de verre (4), lorsqu'elles se déplacent au travers des différentes stations de chauffage selon cet axe (5).

3. Four selon l'une des revendications 1 ou 2, **caractérisé en ce que** lesdites résistances électriques (14) sont constituées par des tubes-résistances en céramique réfractaire autour desquels sont boudinés des fils électroconducteurs.

4. Four selon l'une des revendications 1 ou 2, **caractérisé en ce que** lesdites résistances électriques (14) sont constituées par des moyens ou groupes de moyens de chauffage disposés selon une orientation longitudinale.

5. Four selon l'une des revendications 2 à 4, **caractérisé en ce que** lesdites zones transversales (13) sont à un pas inférieur à 150 mm et de préférence à 100 mm, vu dans la direction parallèle à l'axe (5) du four (1).

6. Four selon l'une des revendications 2 à 5, **caractérisé en ce qu**'il compte au moins deux et de préférence trois zones transversales (13), vu dans une direction perpendiculaire à l'axe (5) du four (1).

7. Four selon l'une des revendications 2 à 6, **caractérisé en ce qu**'il compte au moins quatre et de préférence six zones axiales (7, 8, 9, 10, 11, 12), vu dans une direction parallèle à l'axe (5) du four (1), zones disposées latéralement par rapport audit axe (5), afin d'être en regard de chacune des deux parties latérales de la feuille de verre (4).

8. Four selon l'une des revendications précédentes, **caractérisé en ce que** chaque zone axiale (7, 8, 9, 10, 11, 12) ou respectivement transversale (13) est constituée par un ensemble de deux tubes-résistances (14) supportés par un berceau (15) commun.

9. Four selon la revendication 8, **caractérisé en ce que** lesdits berceaux (15) sont réglables en hauteur, afin que la distance entre un tube-résistance (14) et la feuille de verre (4) puisse être réglée notamment entre 100 et 300 mm.

10. Four selon l'une des revendications précédentes, **caractérisé en ce qu**'il comporte en outre des stations de chauffage auxiliaires dont tous les tubes-résistances de la partie supérieure sont orientés parallèlement à l'axe (5) du four (1).

11. Four selon la revendication 10, **caractérisé en ce que** lesdites stations de chauffage auxiliaires constituent les premières stations de chauffage du four.

12. Application du four selon l'une des revendications 1 à 9 à la réalisation de vitrages (4) comportant un double bombage.

13. Application du four selon la revendication 12 à la réalisation de vitrages (4) en "S" obtenus au moyen d'un cadre de bombage (24) ouvert en son centre et comportant une partie pleine (30).

14. Application selon la revendication 13, **caractérisée en ce que** les vitrages (4) en "S" sont obtenus au moyen d'un cadre (24) dont la partie pleine (30) sur laquelle s'appuie une portion de la surface de la feuille de verre (4) n'est pas située immédiatement à proximité des bords.

## Claims

1. Furnace (1, 2, 3) for bending glass sheets, notably by subsidence onto a bending frame (6, 24), the furnace comprising at least one heating station, the walls of which are equipped with resistors, characterized in that the series of resistor tubes (14) associated with the vault of the heating station is distributed between one or more axial zones (7, 8, 9, 10, 11, 12) in which the resistors (14) are orientated parallel to the axis (5) of the furnace (1) and one or more transverse zones (13), in which the resistors (14) are orientated perpendicularly to the axis (5) of the furnace (1), the heating power attributed to a given axial zone (7, 8, 9, 10, 11, 12) or transverse zone (13) being regulated independently of the heating powers attributed to the other axial and transverse zones.

2. Furnace according to Claim 1, characterized in that said transverse zones (13) are centred on the axis (5) of the furnace (1), in order to be opposite the central part of the glass sheets (4) when they travel through the various heating stations along this axis (5).

3. Furnace according to one of claims 1 or 2, characterized in that said electrical resistors (14) are constituted of resistor tubes of refractory ceramic, around which electrically conducting threads are wound.

4. Furnace according to one of Claims 1 or 2, characterized in that said electrical resistors (14) are constituted of heating means or groups of heating means disposed in a longitudinal orientation.

5. Furnace according to one of Claims 2 to 4, characterized in that said transverse zones (13) are at a pitch of less than 150 mm and preferably less than 100 mm, as viewed in the direction parallel to the axis (5) of the furnace (1).

6. Furnace according to one of Claims 2 to 5, characterized in that it contains at least two and preferably three transverse zones (13) as viewed in a direction perpendicular to the axis (5) of the furnace (1).

7. Furnace according to one of Claims 2 to 6, characterized in that it contains at least four and preferably six axial zones (7, 8, 9, 10, 11, 12) as viewed in a direction parallel to the axis (5) of the furnace (1), zones being disposed laterally with reference to said axis (5) in order to be opposite each of the two lateral parts of the glass sheet (4).

8. Furnace according to one of the preceding Claims, characterized in that each axial zone (7, 8, 9, 10, 11, 12) or transverse zone (13) respectively is constituted of an assembly of two resistor tubes (14) supported by a common cradle (15).

9. Furnace according to Claim 8, characterized in that said cradles (15) are adjustable in height, in order that the distance between a resistor tube (14) and the glass sheet (4) can be regulated, notably, between 100 and 300 mm.

10. Furnace according to one of the preceding Claims, characterized in that it comprises, in addition, auxiliary heating stations, of which all the resistor tubes of the upper part are orientated parallel to the axis (5) of the furnace (1).

11. Furnace according to Claim 10, characterized in that said auxiliary heating stations constitute the first heating stations of the furnace.

12. Application of the furnace according to one of Claims 1 to 9 to the production of panes (4) comprising a double curvature.

13. Application of the furnace according to Claim 12 to the production of panes (4) of S-shape produced by means of a bending frame (24) open at its centre and comprising a solid portion (30).

14. Application according to Claim 13, characterized in that the S-shaped panes (4) are produced by means of a frame (24), of which the solid part (30) on which a portion of the surface of the glass sheet (4) bears is not situated in the immediate proximity to the edges.

## Patentansprüche

1. Ofen (1, 2, 3) für das Biegen, insbesondere durch Absenkenlassen auf einem Biegerahmen (6, 24), von Glasscheiben, welcher wenigstens eine Erwärmungsstation enthält, deren Wände mit Heizwiderständen ausgerüstet sind, **dadurch gekennzeichnet, daß** die Reihe der Heizwiderstandsrohre (14), die an der Decke der Erwärmungsstation vorgesehen sind, zwischen einer oder mehreren axiale Zonen (7, 8, 9, 10, 11, 12), in denen die Widerstandsheizelemente (14) parallel zur Achse (5) des Ofens (1), und zwischen einer oder mehreren querverlaufenden Zonen (13) verteilt sind, in denen die Widerstandsheizelemente (14) senkrecht zur Achse (5) des Ofens (1) ausgerichtet sind, wobei die Heizleistung, mit der eine axiale Zone (7, 8, 9, 10, 11, 12) oder querverlaufende Zone (13) versorgt ist, unabhängig von den Wärmemengen geregelt wird, die den anderen axialen und querverlaufenden Zonen zugeführt sind.

2. Ofen nach Anspruch 1, **dadurch gekennzeichnet, daß** die querverlaufenden Zonen (13) auf die Achse (5) des Ofens (1) zentriert sind, um in Bezug auf den zentralen Teil der Glasscheiben (4) zu bleiben, wenn sich diese entlang der Achse (5) durch die verschiedenen Erwärmungsstationen bewegen.

3. Ofen nach Anspruch 1 oder 2, **dadurch gekennzeichnet, daß** die elektrischen Heizwiderstände (14) aus feuerfesten Keramikröhren bestehen, um welche Leitungsdrähte gewickelt sind.

4. Ofen nach Anspruch 1 oder 2, **dadurch gekennzeichnet, daß** die elektrischen Heizwiderstände (14) aus Heizelementen oder Gruppen davon bestehen, die entsprechend einer Längsrichtung angeordnet sind.

5. Ofen nach einem der Ansprüche 2 bis 4, **dadurch gekennzeichnet, daß** die querverlaufenden Zonen (13) einen Abstand von unter 150 und vorzugsweise von unter 100 mm in der parallel zur Achse (5) des Ofens (1) genommenen Richtung aufweisen.

6. Ofen nach einem der Ansprüche 2 bis 5, **dadurch gekennzeichnet, daß** er wenigstens zwei und vorzugsweise drei querverlaufende Zonen (13) in einer senkrecht zur Achse (5) des Ofens (1) genommenen Richtung aufweist.

7. Ofen nach einem der Ansprüche 2 bis 6, **dadurch gekennzeichnet, daß** er in einer parallel zur Achse (5) des Ofens (1) genommenen Richtung wenigstens vier und vorzugsweise sechs axiale Zonen (7, 8, 9, 10, 11, 12) aufweist, die seitlich zu dieser Achse (5) angeordnet sind, um in Bezug auf jeden der beiden Seitenteile der Glasscheibe (4) zu bleiben.

8. Ofen nach einem der vorhergehenden Ansprüche, **dadurch gekennzeichnet, daß** jede axiale Zone (7, 8, 9, 10, 11, 12), bzw. querverlaufende Zone (13) aus einem Aufbau aus zwei Heizwiderstandsrohren (14) besteht, die von einer gemeinsamen Halterung (15) getragen werden.

9. Ofen nach Anspruch 8, **dadurch gekennzeichnet, daß** die Halterungen (15) in ihrer Höhe regelbar sind, um den Abstand zwischen einem Heizwiderstandsrohr (14) und der Glasscheibe (4) insbesondere zwischen 100 und 300 mm einstellen zu können.

10. Ofen nach einem der vorhergehenden Ansprüche**, dadurch gekennzeichnet, daß** er außerdem zusätzliche Erwärmungsstationen umfaßt, deren sämtliche Heizwiderstandsrohre der oberen Zone parallel zu Achse (5) des Ofens (1) ausgerichtet sind.

11. Ofen nach Anspruch 10, **dadurch gekennzeichnet, daß** die zusätzlichen Erwärmungsstationen die ersten Erwärmungsstationen des Ofens bilden.

12. Verwendung des Ofens nach einem der Ansprüche 1 bis 9 zur Herstellung von Glasscheiben (4), die eine Doppelbiegung enthalten.

13. Verwendung des Ofens nach Anspruch 12 zur Herstellung von S-förmigen Glasscheiben (4), die mit einem Biegerahmen (24) erhalten werden, der in seiner Mitte offen ist und einen vollen Bereich (30) enthält.

14. Verwendung nach Anspruch 13, **dadurch gekennzeichnet, daß** die S-förmigen Glasscheiben (4) mit einem Rahmen (24) hergestellt werden, dessen voller Bereich (30), auf dem ein Teil der Oberfläche der Glasscheibe (4) aufliegt, sich nicht unmittelbar in der Nähe der Ränder befindet.
